# FASCICULE DE BREVET EUROPEEN

(11) **EP 3 012 416 B1**
(45) Date de publication et mention de la délivrance du brevet: **27.09.2023**
(21) Numéro de dépôt: 15190228.5
(22) Date de dépôt: 16.10.2015
(51) Int. Cl.: F01D 25/02, B64D 15/12, B64D 15/16, F02C 7/047, B64D 33/02

(54) **BEC DE SÉPARATION ET TURBOMACHINE ASSOCIÉE**
TEILER UND ZUGEHÖRIGE STRÖMUNGSMASCHINE
SPLITTING EDGE AND CORRESPONDING TURBOMACHINE

(30) Priorité: 21.10.2014 BE 201400772
(43) Date de publication de la demande: 27.04.2016
(73) Titulaire: Safran Aero Boosters SA, 4041 Herstal (BE)
(72) Inventeur: HERBAUT, Ghislain, 4257 Berloz (BE); BOUILLON, David, 1200 Woluwe-Saint-Lambert (BE)
(74) Mandataire: Lecomte & Partners

(56) Documents cités:
- EP-A2- 2 365 219
- FR-A- 931 295
- JP-A- 2008 159 336
- US-A1- 2004 065 092
- US-A1- 2008 023 589
- US-A1- 2013 291 979
- US-B1- 6 570 333

## Description

### Domaine technique

L'invention a trait à un bec de séparation de turbomachine axiale avec un système de dégivrage. Plus particulièrement, l'invention traite d'un bec de séparation d'un flux primaire et d'un flux secondaire d'une turbomachine, le bec de séparation étant muni d'un système de dégivrage. L'invention a également trait à une turbomachine comportant un bec de séparation avec un système de dégivrage.

### Technique antérieure

Dans l'optique d'optimiser leur poussée et leur rendement tout en réduisant les nuisances sonores, les turboréacteurs travaillent avec plusieurs flux d'airs annulaires. Généralement, une turbomachine sépare un flux entrant en un flux primaire et en un flux secondaire ; ces deux derniers ont des formes de manches annulaires. Le flux primaire emprunte les compresseurs, une chambre de combustion, puis est détendu dans des turbines. Le flux secondaire contourne par l'extérieur le compresseur, la chambre de combustion, la turbine, et regagne ensuite le flux primaire en sortie du turboréacteur. Les flux sont séparés par un bec de séparation circulaire placé en amont du compresseur, sa géométrie limite l'entrée d'air dans le compresseur.

L'air entrant dans la turbomachine reste à température atmosphérique au niveau du bec de séparation. Ces températures pouvant descendre à - 50°C en altitude, de la glace peut se former sur le bec avec l'humidité. En cours de vol, cette glace peut s'étendre et s'accumuler jusqu'à former des blocs en tête d'aubes statoriques du compresseur. Ces blocs peuvent aussi modifier la géométrie du bec et influer sur le flux d'air entrant dans le compresseur, ce qui peut en réduire le rendement. A force de se développer, les blocs peuvent devenir particulièrement massifs. Par la suite, ils risquent de se détacher et être ingérés par le compresseur, risquant de dégrader au passage les aubes rotoriques et statoriques. Cette ingestion est particulièrement pénalisante tant elle ne subit pas au préalable un passage dans la soufflante. Pour limiter cette formation de glace, les becs de séparation sont munis d'un dispositif de dégivrage.

Le document US2004065092 A1 divulgue une turbomachine axiale incluant un compresseur basse pression dont l'entrée est délimitée par un bec de séparation annulaire. Le bec permet de séparer un flux entrant dans la turbomachine en un flux primaire entrant dans le compresseur, et un flux secondaire contournant le compresseur. Le bec de séparation est lié à la rangée amont d'aubes du compresseur et comprend un système de dégivrage électrique avec une résine époxy recouvrant le corps du bec de séparation, et une résistance chauffante noyée dans la résine. La résistance présente une forme d'enroulement pour augmenter la chaleur apportée au bec de séparation, cependant cette forme en bobine nécessite d'augmenter l'épaisseur de la couche de résine. Cette augmentation d'épaisseur ajoute une contrainte géométrique. Le bec de séparation devenant moins aiguisé, davantage de perturbations apparaissent dans les flux séparés, ce qui réduit le rendement de la turbomachine.

Le document US 2008/0023589 A1 divulgue une entrée avec un assemblage pour le contrôle d'un flux. Cette entrée est celle d'un moteur pour avion à réaction et présente une forme axisymétrique. Elle est équipée de plusieurs rangées circonférentielles d'actionneurs de plasmas.

### Résumé de l'invention

### Problème technique

L'invention a pour objectif de résoudre au moins un des problèmes posés par l'art antérieur. Plus précisément, l'invention a pour objectif d'augmenter le rendement d'une turbomachine dotée d'un bec de séparation avec un système de dégivrage. L'invention a également pour objectif d'améliorer le dégivrage d'un bec de séparation entre un flux primaire et un flux secondaire d'une turbomachine axiale.

### Solution technique

On aura bien compris que l'invention a pour objet un bec de séparation avec un système de formation de plasma sur une surface de guidage de flux annulaire d'une turbomachine, le plasma étant adapté pour réchauffer la surface, préférentiellement adapté pour la dégivrer. L'invention permet à la fois d'éviter la formation de givre et éventuellement de liquéfier le givre.

L'invention est définie dans les revendications adjointes, et a pour objet un bec de séparation de turbomachine axiale selon la revendication 1, ainsi qu'une turbomachine axiale selon la revendication 14. Les revendications dépendantes définissent certains modes de réalisation préférés mais non limitatifs de ce bec de séparation de turbomachine axiale et de cette turbomachine axiale.

Optionnellement, la couche diélectrique occupe sensiblement toute la portion de jonction.

Optionnellement, la surface de séparation présente un profil de révolution autour de l'axe de rotation de la turbomachine, le profil de la portion externe est généralement plus incliné par rapport à l'axe de rotation que le profil de la portion interne, préférentiellement lesdits profils sont généralement inclinés l'un par rapport à l'autre d'un angle inférieur à 45°, préférentiellement inférieur à 30°, plus préférentiellement inférieur à 20°.

Optionnellement, la couche diélectrique est formée par la matrice du matériau composite.

Optionnellement, le bec de séparation est configuré pour délimiter et/ou former l'entrée d'un compresseur de la turbomachine axiale.

Optionnellement, la paroi annulaire externe forme partiellement la surface de séparation, la paroi annulaire externe étant éventuellement destinée à être en contact et/ou à délimiter le flux secondaire.

Optionnellement, le ou chaque plasma présente une forme annulaire, éventuellement le plasma est segmenté et forme plusieurs arcs.

Optionnellement, le bec de séparation comprend deux premières électrodes entourées par au moins une couche diélectrique, les premières électrodes étant distantes de plus de 1,00 mm, préférentiellement de plus de 3,00 mm.

Optionnellement, le bec de séparation comprend deux deuxièmes électrodes séparées l'une de l'autre par une couche diélectrique, ladite couche étant éventuellement en contact annulaire de chacune des deuxièmes électrodes.

Optionnellement, au moins une ou chaque couche diélectrique présente une épaisseur constante.

Optionnellement, l'électrode est au moins partiellement, préférentiellement totalement intégrée dans l'épaisseur de la couche diélectrique.

Optionnellement, les profils de révolution autour de l'axe de rotation de la turbomachine des portions annulaires interne et externe sont généralement droits et inclinés l'un par rapport à l'autre d'un angle supérieur à 5°, préférentiellement supérieur à 10°, plus préférentiellement supérieur à 15°.

Optionnellement, le bec de séparation est un bec de séparation formé sur une extrémité amont de compresseur, notamment basse-pression, de turbomachine axiale ; ou le bec de séparation est formé sur un carter amont de turbomachine axiale, le carter amont comprenant une veine annulaire primaire pour le flux primaire et une veine annulaire secondaire pour le flux secondaire.

Optionnellement, le bec de séparation comprend deux couches diélectriques et deux jeux d'électrodes, chaque jeu présentant une première électrode destinée à être en contact d'un flux de la turbomachine, une deuxième électrode, une couche diélectrique étant intercalée entre chaque deuxième électrode et un flux de la turbomachine.

Optionnellement, la surface de séparation présente un profil de révolution autour de l'axe de rotation de la turbomachine, le profil de révolution de la portion externe forme la majorité radiale du profil de révolution de la surface de séparation.

Optionnellement, le bec de séparation présente une forme générale de lame circulaire avec un fil de lame circulaire, ou arête circulaire, orienté axialement vers l'amont, préférentiellement la lame circulaire comprend une émouture orientée axialement vers l'amont. Par émouture on entend la partie de la lame qui s'amincit, éventuellement progressivement, pour former le tranchant avec le fil de la lame.

L'invention a également pour objet une turbomachine axiale comprenant un bec de séparation, remarquable en ce que le bec de séparation est conforme à l'invention.

Selon un mode avantageux de l'invention, la turbomachine comprend une soufflante, le bec de séparation étant disposé en aval de la soufflante.

Selon un mode avantageux de l'invention, la turbomachine comprend une alimentation branchée à au moins une, éventuellement à chaque électrode, et qui est configurée pour former au moins un plasma dégivrant avec la au moins une électrode et au moins une couche diélectrique.

### Avantages apportés

L'invention offre un système économe en énergie, ce qui permet de dégivrer le bec de séparation avec un minimum d'énergie primaire. Par ce biais, le rendement global de la turbomachine est amélioré. La répartition des électrodes, ainsi que l'épaisseur et la configuration des couches diélectriques permettent de répartir des zones de plasma pour combattre l'accrétion de givre. La présence de plusieurs jeux d'électrodes limite le niveau d'énergie requise.

L'emploi du plasma est léger grâce à la finesse de ses électrodes. La température peut être ajustée pour ne pas dégrader la couche diélectrique, ce qui facilite l'adoption d'une paroi et d'une virole composites à matrices organiques. La configuration choisie est robuste et permet de résister aux ingestions de corps étrangers. Lors d'une perte d'aube, le bec de séparation résiste à de fortes accélérations, par exemple de 100 g.

### Brève description des dessins

La figure 1 esquisse une turbomachine axiale selon l'invention.
La figure 2 ébauche un compresseur de ladite turbomachine axiale selon l'invention.
La figure 3 représente un bec de séparation selon l'invention.

### Description des modes de réalisation

Dans la description qui va suivre, les termes intérieur ou interne et extérieur ou externe renvoient à un positionnement par rapport à l'axe de rotation d'une turbomachine axiale.

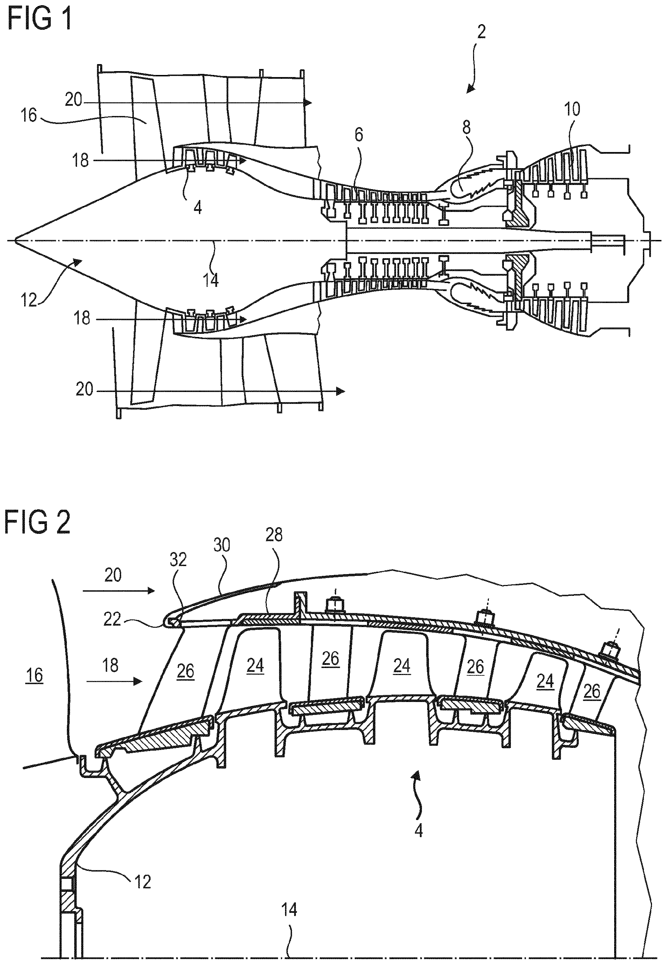

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8. Des moyens de démultiplication peuvent augmenter la vitesse de rotation transmise aux compresseurs.

Un ventilateur d'entrée communément désigné fan ou soufflante 16 est couplé au rotor 12 et génère un flux d'air qui se divise en un flux primaire 18 traversant les différents niveaux susmentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires, ils sont canalisés par le carter de la turbomachine.

La figure 2 est une vue en coupe d'un compresseur d'une turbomachine axiale telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse-pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression statique.

Le bec de séparation 22 délimite circonférentiellement et/ou axialement l'entrée du compresseur 4. Il peut comprendre une virole externe 28 et une paroi annulaire externe 30 qui peuvent être reliées à l'aide d'un crochet annulaire 32 formé sur la paroi externe 30. Les aubes statoriques 26 s'étendent essentiellement radialement depuis la virole externe 28 à laquelle elles sont soudées. Afin d'éviter la présence ou la formation de givre, de glace sur le bec de séparation, celui-ci est doté ou associé à un système de dégivrage plasma ou générateur de plasma. Ce dernier permet de réchauffer le bec de séparation, en particulier l'air situé en amont, afin d'éviter que du givre ne s'y forme et ne s'y accumule, et/ou afin de faire fondre une couche de givre qui y serait apparue.

Le bec de séparation 22 correspond à une partie amont du carter du compresseur et y est monté en porte-à-faux. Selon l'invention, le bec de séparation peut également être un carter amont de turbomachine axiale, par exemple un carter de montage de soufflante. Le carter amont peut inclure une veine annulaire primaire pour le flux primaire et une veine annulaire secondaire pour le flux secondaire, les veines annulaires étant coaxiales et l'une dans l'autre. Il peut comprendre une rangée de bras de carter traversant la veine secondaire.

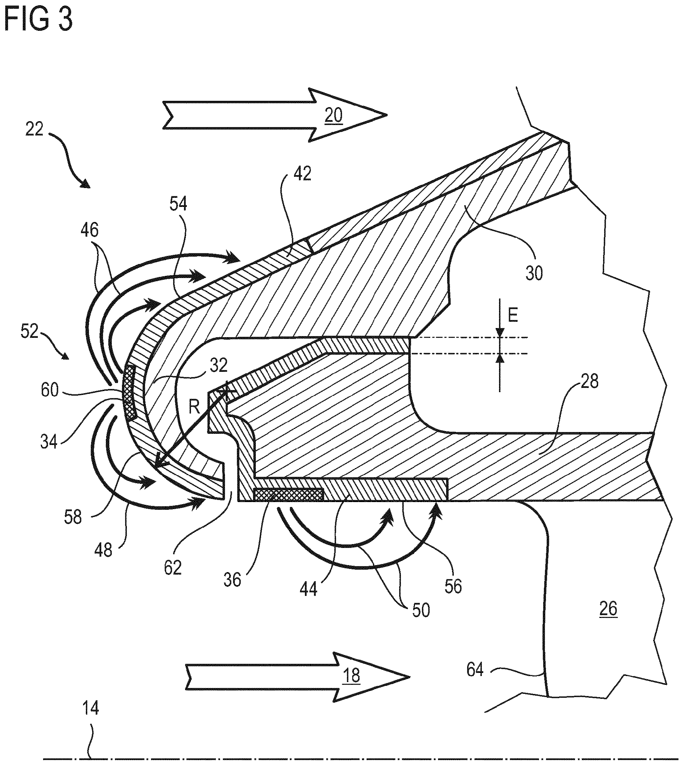

La figure 3 représente un bec de séparation 22 avec des électrodes (28 ; 30 ; 34 ; 36) et des couches diélectriques (42 ; 44) configurées pour donner naissance à des plasmas dégivrants (46 ; 48 ; 50). L'axe de rotation 14, le flux primaire 18 et le flux secondaire 20 sont représentés.

Le bec de séparation 22 présente une surface de séparation 52 qui permet de diviser le flux issu de la soufflante en le partageant entre le flux primaire 18 et le flux secondaire 20. La surface de séparation 52 présente une forme de révolution autour de l'axe de rotation 14, son profil de révolution présente une forme de coin, d'angle aigu. Elle forme une lame circulaire saillante et essentiellement mince, ce qui a pour effet de préserver la section de passage restante aux flux primaire et secondaire pour un flux entrant donné. Le rendement de la turbomachine est ainsi avantageusement optimisé.

La surface de séparation 52 forme la peau, l'enveloppe du bec de séparation 22 ; elle est davantage en regard de l'amont que de l'aval. Elle comprend une portion annulaire externe 54 formée par la paroi annulaire externe 30 qui guide le flux secondaire 20, une portion annulaire interne 56 formée par la virole externe 28, en contact du flux primaire 18, et une portion annulaire de jonction 58 où peut être disposée l'arête circulaire amont 60 qui forme un bord d'attaque circulaire saillant en amont du bec. Le profil de révolution de la portion externe 54 est généralement droit et incliné par rapport à l'axe de rotation 14. Le profil de révolution de la portion interne 56 est sensiblement droit et sensiblement parallèle à l'axe de rotation 14. Les profils de révolution des portions annulaires interne 56 et externe 54 sont généralement inclinés l'un par rapport à l'autre d'un angle compris entre 5° et 45°, éventuellement compris entre 20° et 25°. Ils peuvent converger vers l'amont. La portion de jonction 58 peut présenter un profil courbe ou coudé, avec un rayon de courbure moyen R et/ou constant inférieur à 100 mm, préférentiellement inférieur ou égal à 5 mm. La portion de jonction 58 se distingue d'au moins une ou de chaque portion annulaire interne ou externe en ce que le profil y devient droit. Alternativement, la portion de jonction peut essentiellement être une ligne circulaire, telle l'arête circulaire amont ; elle peut essentiellement être un prolongement rectiligne d'un profil des portions annulaires.

Le générateur de plasma comprend plusieurs jeux d'électrodes (28 ; 30 ; 34 ; 36), en l'occurrence deux jeux, et deux couches de matériaux diélectriques (42 ; 44). Eventuellement, une même couche diélectrique (42 ; 44) est commune à plusieurs jeux d'électrodes. Au moins une couche diélectrique (42 ; 44) peut comprendre de l'époxy. Chaque couche diélectrique (42 ; 44) peut présenter une forme de révolution autour de l'axe de rotation 14, avec un profil de révolution en forme de crochet qui enveloppe une portion amont de la virole ou de la paroi. Le profil de révolution de la couche diélectrique la plus en amont 42 peut chevaucher le profil de l'autre couche diélectrique 44 sur sensiblement toute sa hauteur. Une couche diélectrique 44 ou une portion de couche diélectrique peut être à l'interface entre la paroi 30 et la virole 28, en formant un joint tubulaire. Au moins une ou chaque couche présente une épaisseur E, éventuellement constante, comprise entre 0,10 mm et 1,00 mm, préférentiellement comprise entre 0,40 mm et 0,60 mm, éventuellement égale à 0,50 mm. Les couches diélectriques (42 ; 44) sont séparées axialement par une gorge annulaire 62 formant un jeu circulaire axial 62, qui peut permettre un mouvement relatif entre la virole et la paroi au niveau du crochet 32. Cette particularité offre l'avantage de permettre une dilatation différentielle.

L'un des jeux d'électrodes, ou jeu amont, comprend une première électrode 34 qui selon l'invention, forme l'arête circulaire amont 60, optionnellement en la longeant. La première électrode 34 présente une face amont faisant face au flux entrant, issu de la soufflante. Elle est disposée radialement à mi-hauteur de la portion de jonction 58. Le jeu amont comprend une deuxième électrode 30, qui peut être formée par la paroi externe 30 du bec de séparation. Cette deuxième électrode 30 peut tout aussi bien être une autre électrode rapportée. La couche diélectrique amont 42, qui est la plus en amont, est intercalée entre les électrodes (30 ; 34) du jeu amont et forme la portion de jonction. Elle recouvre la paroi 30 sur sa portion formant le crochet 32. Le jeu amont d'électrodes permet de créer plusieurs plasmas annulaires (46 ; 48), ici deux, à l'intérieur et à l'extérieur de l'arête amont 60. Le plasma externe 46 s'étend en aval sur la surface de séparation.

Un autre jeu d'électrodes (36 ; 44), ou jeu aval, ou encore jeu interne, dans la mesure où ce jeu est entouré par le jeu amont et/ou commence en aval du jeu amont, comprend une première électrode 36 délimitant, encerclant le flux primaire. Sa deuxième électrode 28 peut être la virole externe 28, ou une autre électrode rapportée. La couche diélectrique interne 44 s'étend depuis la première électrode 36 associée en direction de l'aube 26 ; , éventuellement sur la majorité de l'espace entre la première électrode 36 associée et l'extrémité radiale externe du bord d'attaque 64 de l'aube. Ce jeu permet de générer un plasma 50 à l'intérieur du bec de séparation.

Au moins une ou chaque première électrode (34 ; 36) est au moins partiellement logée dans l'épaisseur de la couche diélectrique 44 associée. Au moins une ou chaque première électrode (34 ; 36) peut être circulaire et coaxiale avec le bec, et/ou peut présenter une forme de profilé, avec une section rectangulaire. Un des côtés principaux du rectangle est en contact d'un flux (18 ; 20), l'aspect principal correspond à la taille du côté et donc à la surface de l'électrode correspondante. Trois autres côtés, dont un côté principal, sont majoritairement ou totalement recouverts par une couche diélectrique (42 ; 44).

Chaque jeu permet de former un plasma circulaire (46 ; 48 ; 50). Au moins un ou plusieurs plasmas peuvent se former dans une ou plusieurs portions toriques. Un plasma peut être segmenté, et être formé de plusieurs portions angulaires de plasmas.

Le générateur de plasma comprend une alimentation (non représentée) qui procure, par exemple, une tension de 2 kV à 10 kV, un signal alternatif sinusoïdal ou carré avec une période de quelques nanosecondes. Au moins une ou plusieurs électrodes sont reliées à la masse. Le générateur de plasma est configuré de sorte à ioniser une partie du gaz, et à entraîner les ions formés à l'aide d'un champ électrique. En complément, le générateur de plasma est configuré pour réchauffer l'air.

Eventuellement, la paroi externe du bec de dégivrage et/ou la virole externe est réalisée en un matériau composite à matrice organique tel de l'époxy. Le composite peut également comprendre des fibres de verres. Selon cette alternative, le composite peut former une couche diélectrique ; éventuellement la virole et/ou la paroi est confondue avec sa couche diélectrique. Dans ce cas, des électrodes rapportées peuvent être ajoutées pour former différents jeux et générer plusieurs plasmas.

## Revendications

1. Bec de séparation (22) de turbomachine axiale (2), notamment de compresseur (4) de turbomachine axiale (2), le bec comprenant :
- une surface de séparation (52) avec une arête circulaire amont (60), destinée à séparer un flux entrant dans la turbomachine en un flux annulaire primaire (18) et en un flux annulaire secondaire (20) ;
- une couche de matériau diélectrique (42 ; 44) formant partiellement la surface de séparation (52) ; **caractérisé en ce qu'**il comprend en outre au moins une électrode (34 ) de générateur de plasma dégivrant, telle que ladite au moins une électrode forme partiellement la surface de séparation (52), forme l'arête amont (60) de la surface de séparation (52), et est adaptée pour pouvoir former un plasma (46 ; 48 ; 50) en combinaison avec la couche diélectrique (42 ; 44) afin de dégivrer la surface de séparation (52).

2. Bec de séparation (22) selon la revendication 1, **caractérisé en ce que** ladite au moins une électrode (34) longe l'arête amont sur la majorité de son périmètre.

3. Bec de séparation (22) selon l'une des revendications 1 à 2, **caractérisé en ce que** ladite au moins une électrode (36) de générateur de plasma est disposée de sorte à délimiter le flux primaire (18) de la turbomachine.

4. Bec de séparation (22) selon l'une des revendications 1 à 3, **caractérisé en ce que** ladite au moins une électrode (34 ; 36) présente au moins une face, éventuellement une face principale, totalement recouverte par la couche diélectrique (42 ; 44), éventuellement ladite au moins une électrode est un profilé de section rectangulaire, ladite au moins une électrode présentant trois faces totalement recouvertes par la couche diélectrique.

5. Bec de séparation (22) selon l'une des revendications 1 à 4, **caractérisé en ce que** la surface de séparation (52) comprend une portion annulaire interne (56) destinée à délimiter le flux primaire (18), une portion annulaire externe (54) destinée à délimiter le flux secondaire (20), et une portion annulaire de jonction (58) reliant la portion annulaire interne (56) à la portion annulaire externe (54), éventuellement ladite au moins une électrode (34) est disposée sur la portion de jonction.

6. Bec de séparation (22) selon la revendication 5, **caractérisé en ce que** la surface de séparation (52) présente un profil de révolution autour de l'axe de rotation (14) de la turbomachine (2), les profils des portions annulaires interne et externe (54 ; 56) étant généralement droits, et le profil de la portion de jonction (58) est courbe avec un rayon de courbure R inférieur ou égal à 50,00 mm, préférentiellement inférieur ou égal à 10,00 mm, plus préférentiellement inférieur ou égal à 5,00 mm.

7. Bec de séparation (22) selon l'une des revendications 1 à 6, **caractérisé en ce que** ladite au moins une électrode est une première électrode (34 ; 36), le bec de séparation comprenant une deuxième électrode (28 ; 30) séparée de la première électrode par la couche diélectrique (42 ; 44), les électrodes étant configurées pour pouvoir former un plasma (46 ; 48 ; 50) sur la surface de séparation (52) en combinaison avec la couche de matériau diélectrique.

8. Bec de séparation (22) selon l'une la revendication 7, **caractérisé en ce qu'**il comprend une paroi annulaire externe (30) qui est la deuxième électrode, éventuellement la paroi externe (30) comprend un crochet annulaire amont (32) avec une surface amont et une surface aval éventuellement ouverte axialement vers l'aval, la couche diélectrique (42) recouvrant la surface amont du crochet (32).

9. Bec de séparation (22) selon l'une des revendications 1 à 8, **caractérisé en ce qu'**il comprend une virole externe (28) et une rangée annulaire d'aubes statoriques (26) s'étendant radialement vers l'intérieur depuis la virole externe (28), éventuellement la virole externe est la deuxième électrode selon les revendications 7 et 8.

10. Bec de séparation (22) selon l'une des revendications 1 à 9, **caractérisé en ce qu'**il comprend au moins un corps en matériau composite avec une matrice organique et des fibres, notamment des fibres de verre, éventuellement la couche diélectrique est formée par la matrice du matériau composite.

11. Bec de séparation (22) selon l'une des revendications 1 à 10, **caractérisé en ce que** la couche diélectrique est une première couche diélectrique (42), le bec de séparation comprenant en outre une deuxième couche diélectrique circulaire (44) avec une portion tubulaire, éventuellement les couches diélectriques sont séparées axialement par un jeu circulaire (62).

12. Bec de séparation (22) selon la revendication 11, **caractérisé en ce que** les couches diélectriques (42 ; 44) présentent chacune une forme de révolution avec un profil de révolution autour de l'axe de rotation (14), la couche diélectrique (42) la plus en amont présente un profil de révolution plus haut radialement que l'autre couche diélectrique (44).

13. Bec de séparation (22) selon l'une des revendications 1 à 12, **caractérisé en ce que** ladite au moins une électrode est une première électrode, le bec comprenant au moins quatre électrodes (28 ; 30 ; 34 ; 36) réparties en deux jeux d'électrodes configurés pour pouvoir générer au moins deux, préférentiellement au moins trois, plasmas circulaires (46 ; 48 ; 50) pour dégivrer la surface de séparation (52).

14. Turbomachine (2) axiale comprenant un bec de séparation, **caractérisée en ce que** le bec de séparation est conforme à l'une des revendications 1 à 13, préférentiellement la turbomachine (2) comprend une soufflante, le bec de séparation étant disposé en aval de la soufflante.

15. Turbomachine (2) selon la revendication 14, **caractérisée en ce qu'**elle comprend une alimentation branchée à au moins une, éventuellement à chaque électrode, et qui est configurée pour former au moins un plasma dégivrant avec la au moins une électrode et au moins une couche diélectrique.

## Patentansprüche

1. Trenndüse (22) einer axialen Turbomaschine (2), insbesondere eines Kompressors (4) einer axialen Turbomaschine (2), wobei die Düse folgendes umfasst:
- eine Trennfläche (52) mit einer kreisförmigen stromaufwärtigen Kante (60) zum Trennen einer in die Turbomaschine eintretenden Strömung in eine primäre Ringströmung (18) und eine sekundäre Ringströmung (20);
- eine Schicht aus dielektrischem Material (42; 44), die teilweise die Trennfläche (52) bildet;
**dadurch gekennzeichnet, dass** sie außerdem mindestens eine Elektrode (34) zur Plasma-Erzeugung zur Enteisung umfasst, so dass diese mindestens eine Elektrode teilweise die Trennfläche (52) bildet, den stromaufwärtigen Rand (60) der Trennfläche (52) bildet und so angepasst ist, dass sie in der Lage ist, ein Plasma (46; 48; 50) in Kombination mit der dielektrischen Schicht (42; 44) zu bilden, um die Trennfläche (52) zu enteisen.

2. Trenndüse (22) nach Anspruch 1, **dadurch gekennzeichnet, dass** die mindestens eine Elektrode (34) über den größten Teil ihres Umfangs entlang der stromaufwärtigen Kante verläuft.

3. Trenndüse (22) nach einem der Ansprüche 1 bis 2, **dadurch gekennzeichnet, dass** die mindestens eine Elektrode (36) des Plasmagenerator so angeordnet ist, dass sie die Primärströmung (18) der Turbomaschine begrenzt.

4. Trenndüse (22) nach einem der Ansprüche 1 bis 3, **dadurch gekennzeichnet, dass** die mindestens eine Elektrode (34; 36) mindestens eine Fläche, gegebenenfalls eine Hauptfläche, aufweist, die vollständig von der dielektrischen Schicht (42; 44) bedeckt ist, wobei die mindestens eine Elektrode gegebenenfalls ein Profil mit rechteckigem Querschnitt aufweist, wobei die mindestens eine Elektrode drei Flächen aufweist, die vollständig von der dielektrischen Schicht bedeckt sind.

5. Trenndüse (22) nach einem der Ansprüche 1 bis 4, **dadurch gekennzeichnet, dass** die Trennfläche (52) einen inneren ringförmigen Abschnitt (56), der dazu bestimmt ist, den Primärstrom (18) zu begrenzen, einen äußeren ringförmigen Abschnitt (54), der dazu bestimmt ist, den Sekundärstrom (20) zu begrenzen, und einen ringförmigen Verbindungsabschnitt (58) umfasst, der den inneren ringförmigen Abschnitt (56) mit dem äußeren ringförmigen Abschnitt (54) verbindet, wobei gegebenenfalls die mindestens eine Elektrode (34) auf dem Verbindungsabschnitt angeordnet ist.

6. Trenndüse (22) nach Anspruch 5, **dadurch gekennzeichnet, dass** die Trennfläche (52) ein Rotationsprofil um die Rotationsachse (14) der Turbomaschine (2) aufweist, wobei die Profile der inneren und äußeren ringförmigen Abschnitte (54; 56) im Allgemeinen gerade sind, und das Profil des Verbindungsabschnitts (58) mit einem Krümmungsradius R kleiner oder gleich 50,00 mm, vorzugsweise kleiner oder gleich 10,00 mm, noch bevorzugter kleiner oder gleich 5,00 mm, gekrümmt ist.

7. Trenndüse (22) nach einem der Ansprüche 1 bis 6, **dadurch gekennzeichnet, dass** die mindestens eine Elektrode eine erste Elektrode (34; 36) ist, wobei die Trenndüse eine zweite Elektrode (28; 30) umfasst, die von der ersten Elektrode durch die dielektrische Schicht (42; 44) getrennt ist, wobei die Elektroden so ausgelegt sind, dass sie in der Lage sind, ein Plasma (46; 48; 50) auf der Trennfläche (52) in Kombination mit der Schicht aus dielektrischem Material zu bilden.

8. Trenndüse (22) nach einem der Ansprüche 7, **dadurch gekennzeichnet, dass** sie eine ringförmige Außenwand (30) aufweist, die die zweite Elektrode ist, wobei die Außenwand (30) gegebenenfalls einen ringförmigen stromaufwärts gelegenen Haken (32) mit einer stromaufwärts gelegenen Oberfläche und einer stromabwärts gelegenen Oberfläche aufweist, die gegebenenfalls axial stromabwärts offen ist, wobei die dielektrische Schicht (42) die stromaufwärts gelegene Oberfläche des Hakens (32) bedeckt.

9. Trenndüse (22) nach einem der Ansprüche 1 bis 8, **dadurch gekennzeichnet, dass** sie einen äußeren Klemmring (28) und eine ringförmige Anordnung von Statorschaufeln (26) umfasst, die sich von dem äußeren Klemmring (28) radial nach innen erstrecken, wobei der äußere Klemmring gegebenenfalls die zweite Elektrode ist.

10. Trenndüse (22) nach einem der Ansprüche 1 bis 9, **dadurch gekennzeichnet, dass** sie mindestens einen Körper aus Verbundmaterial mit einer organischen Matrix und Fasern, insbesondere Glasfasern, umfasst, wobei gegebenenfalls die dielektrische Schicht durch die Matrix des Verbundmaterials gebildet wird.

11. Trenndüse (22) nach einem der Ansprüche 1 bis 10, **dadurch gekennzeichnet, dass** die dielektrische Schicht eine erste dielektrische Schicht (42) ist, wobei die Trenndüse ferner eine zweite kreisförmige dielektrische Schicht (44) mit einem röhrenförmigen Abschnitt umfasst, wobei die dielektrischen Schichten gegebenenfalls durch einen kreisförmigen Spalt (62) axial getrennt sind.

12. Trenndüse (22) nach Anspruch 11, **dadurch gekennzeichnet, dass** die dielektrischen Schichten (42; 44) jeweils eine Rotationsform mit einem Rotationsprofil um die Rotationsachse (14) aufweisen, wobei die vorderste dielektrische Schicht (42) radial ein höheres Rotationsprofil als die andere dielektrische Schicht (44) aufweist.

13. Trenndüse (22) nach einem der Ansprüche 1 bis 12, **dadurch gekennzeichnet, dass** die mindestens eine Elektrode eine erste Elektrode ist, wobei die Düse mindestens vier Elektroden (28; 30; 34; 36) umfasst, die in zwei Sätze von Elektroden unterteilt sind, die so ausgelegt sind, dass sie mindestens zwei, vorzugsweise mindestens drei kreisförmige Plasmen (46; 48; 50) zum Auftauen der Trennfläche (52) erzeugen können.

14. Axiale Turbomaschine (2) mit einer Trenndüse, **dadurch gekennzeichnet, dass** die Trenndüse einem der Ansprüche 1 bis 13 entspricht, wobei vorzugsweise die Turbomaschine (2) ein Gebläse aufweist, wobei die Trenndüse stromabwärts des Gebläses angeordnet ist.

15. Turbomaschine (2) nach Anspruch 14, **dadurch gekennzeichnet, dass** sie eine Stromversorgung umfasst, die mit mindestens einer, möglicherweise mit jeder Elektrode verbunden ist und die so ausgelegt ist, dass sie mit der mindestens einen Elektrode und mindestens einer dielektrischen Schicht mindestens ein Enteisungs-Plasma bildet.

## Claims

1. Separation nozzle (22) of an axial turbomachine (2), in particular of a compressor (4) of an axial turbomachine (2), the nozzle comprising:
- a separation surface (52) with a circular upstream edge (60) for separating a flow entering the turbomachine into a primary annular flow (18) and a secondary annular flow (20);
- a layer of dielectric material (42; 44) partially forming the separation surface (52);
**characterised in that** it further comprises at least one de-icing plasma generator electrode (34), such that said at least one electrode partially forms the separation surface (52), forms the upstream edge (60) of the separation surface (52), and is adapted to be able to form a plasma (46; 48; 50) in combination with the dielectric layer (42; 44) in order to de-ice the separation surface (52).

2. The separation nozzle (22) according to claim 1, **characterised in that** said at least one electrode (34) runs along the upstream edge over the majority of its perimeter.

3. The separation nozzle (22) according to any one of claims 1 to 2, **characterised in that** said at least one plasma generator electrode (36) is arranged so as to delimit the primary flow (18) of the turbomachine.

4. The separation nozzle (22) according to any one of claims 1 to 3, **characterised in that** said at least one electrode (34; 36) has at least one face, optionally a main face, totally covered by the dielectric layer (42; 44), optionally said at least one electrode is a profile of rectangular cross-section, said at least one electrode having three faces totally covered by the dielectric layer.

5. The separation nozzle (22) according to any one of claims 1 to 4, **characterised in that** the separation surface (52) comprises an inner annular portion (56) intended to delimit the primary flow (18), an outer annular portion (54) intended to delimit the secondary flow (20), and a connecting annular portion (58) connecting the inner annular portion (56) to the outer annular portion (54), optionally said at least one electrode (34) is disposed on the connecting portion.

6. The separation nozzle (22) according to claim 5, **characterised in that** the separation surface (52) has a profile of revolution about the axis of rotation (14) of the turbomachine (2), the profiles of the inner and outer annular portions (54; 56) being generally straight, and the profile of the connecting portion (58) is curved with a radius of curvature R less than or equal to 50.00 mm, preferably less than or equal to 10.00 mm, more preferably less than or equal to 5.00 mm.

7. The separation nozzle (22) according to any one of claims 1 to 6, **characterised in that** said at least one electrode is a first electrode (34; 36), the separation nozzle comprising a second electrode (28; 30) separated from the first electrode by the dielectric layer (42; 44), the electrodes being configured to be able to form a plasma (46; 48; 50) on the separation surface (52) in combination with the layer of dielectric material.

8. The separation nozzle (22) according to one [sic] of claim 7, **characterised in that** it comprises an annular outer wall (30) which is the second electrode, optionally the outer wall (30) comprises an annular upstream hook (32) with an upstream surface and a downstream surface optionally open axially downstream, the dielectric layer (42) covering the upstream surface of the hook (32).

9. The separation nozzle (22) according to any one of claims 1 to 8, **characterised in that** it comprises an outer shell (28) and an annular array of stator vanes (26) extending radially inwardly from the outer shell (28), where optionally the outer shell is the second electrode.

10. The separation nozzle (22) according to any one of claims 1 to 9, **characterised in that** it comprises at least one body made of a composite material with an organic matrix and fibres, in particular glass fibres, where optionally the dielectric layer is formed by the matrix of the composite material.

11. The separation nozzle (22) according to any one of claims 1 to 10, **characterised in that** the dielectric layer is a first dielectric layer (42), the separation spout further comprising a second circular dielectric layer (44) with a tubular portion, where optionally the dielectric layers are axially separated by a circular gap (62).

12. The separation nozzle (22) according to claim 11, **characterised in that** the dielectric layers (42; 44) each have a rotational shape with a profile of revolution about the axis of rotation (14), the most upstream dielectric layer (42) having a higher profile of revolution radially than the other dielectric layer (44).

13. The separation nozzle (22) according to any one of claims 1 to 12, **characterised in that** said at least one electrode is a first electrode, the nozzle comprising at least four electrodes (28; 30; 34; 36) divided into two sets of electrodes configured to be able to generate at least two, preferably at least three, circular plasmas (46; 48; 50) for de-icing the separation surface (52).

14. Axial turbomachine (2) comprising a separation nozzle, **characterised in that** the separation nozzle complies with any one of claims 1 to 13, where preferably the turbomachine (2) comprises a fan, the separation nozzle being arranged downstream of the fan.

15. Turbomachine (2) according to claim 14, **characterised in that** it comprises a power supply connected to at least one, possibly to each electrode, and which is configured to form at least one de-icing plasma with the at least one electrode and at least one dielectric layer.
